# EUROPÄISCHE PATENTSCHRIFT

(11) **EP 3 610 294 B1**
(45) Veröffentlichungstag und Bekanntmachung des Hinweises auf die Patenterteilung: **25.06.2025**
(21) Anmeldenummer: 18708670.7
(22) Anmeldetag: 01.03.2018
(51) Int. Cl.: G01S 19/07

(54) **VERFAHREN ZUM BETREIBEN EINES KORREKTURDIENSTSYSTEMS UND KORREKTURDIENSTSYSTEM**
METHOD FOR OPERATING A CORRECTION SERVICE SYSTEM AND CORRECTION SERVICE SYSTEM
PROCÉDÉ DE FONCTIONNEMENT D'UN SYSTÈME DE SERVICE DE CORRECTION ET SYSTÈME DE SERVICE DE CORRECTION

(30) Priorität: 12.04.2017 DE 102017206275
(43) Veröffentlichungstag der Anmeldung: 19.02.2020
(73) Patentinhaber: Robert Bosch GmbH, 70442 Stuttgart (DE)
(72) Erfinder: LANGER, Markus, 71679 Asperg (DE); STROBEL, Jens, 71691 Freiberg Am Neckar (DE)
(86) Internationale Anmeldenummer: PCT/EP2018/055120
(87) Internationale Veröffentlichungsnummer: WO 2018/188845

(56) Entgegenhaltungen:
- AU-B2- 733 187
- KR-B1- 101 212 119
- FUJITA SEIGO ET AL: "Design of Integrity Function on Centimeter Level Augmentation Service (CLAS) in Japanese Quasi-Zenith Satellite System", GNSS 2016 - PROCEEDINGS OF THE 29TH INTERNATIONAL TECHNICAL MEETING OF THE SATELLITE DIVISION OF THE INSTITUTE OF NAVIGATION (ION GNSS+ 2016), THE INSTITUTE OF NAVIGATION, 8551 RIXLEW LANE SUITE 360 MANASSAS, VA 20109, USA, 16 September 2016 (2016-09-16), pages 3258 - 3263, XP056013671

## Beschreibung

Die Erfindung betrifft ein Verfahren zum Betreiben eines Korrekturdienstsystems und ein Korrekturdienstsystem.

### Stand der Technik

Globale Navigationssatellitensysteme (GNSS) ermöglichen die Bestimmung der Position eines Nutzergeräts, beispielsweise eines Navigationssystems, in einem Koordinatensystem. Dabei werden mittels des Nutzergeräts die Laufzeiten empfangener Satellitensignale von Satelliten des globalen Navigationssatellitensystems ermittelt und daraus Strecken zwischen den jeweiligen Satelliten und dem Nutzergerät abgeleitet. Als Übertragungsgeschwindigkeit der Satellitensignale wird üblicherweise die Lichtgeschwindigkeit angenommen. Wenn bei der Übertragung Störungen auftreten, beispielsweise aufgrund bestimmter Bedingungen in der Ionosphäre oder der Troposphäre, kommt es unter anderem zu Laufzeitänderungen, wodurch sich Fehler bei der Positionsbestimmung ergeben können. Zur Berücksichtigung derartiger Störungen sind Korrekturdienste bekannt, welche mittels eines existierenden Netzes von stationären Referenzstationen Abweichungen zwischen mittels der Satellitensignale ermittelten Koordinaten und bekannten Koordinaten der jeweiligen Referenzstation ermitteln, Korrekturwerte ableiten und diese Korrekturwerte den Nutzergeräten bereitstellen. Mittels der Korrekturwerte sollen Fehler der beschriebenen Art bei der Positionsbestimmung der Nutzergeräte korrigiert werden. Nachteilig ist, dass keine oder nur eingeschränkte Informationen bezüglich einer Integrität der Korrekturwerte, insbesondere einer Plausibilität derselben, bereitgestellt werden. Weiterhin werden diese Informationen nicht regionenspezifisch bereitgestellt. Hierdurch ergeben sich eine Unsicherheit bei den Ergebnissen der Positionsbestimmung, insbesondere ein mangelnder Bezug von Integritätsinformationen zu bestimmten Regionen. Dies ist insbesondere in Zusammenhang mit sicherheitskritischen Anwendungen des globalen Navigationssatellitensystems problematisch.

Ein gattungsgemäßes Verfahren ist beispielsweise aus der Patentschrift KR 101 212 119 B1 bekannt. Die Veröffentlichung "Design of Integrity Function on Centimeter Level Augmentation Service (CLAS) in Japanese Quasi-Zenith Satellite System" (DOI:10.33012/2016.14571) beschreibt ein Korrekturdienstsystem, bei dem das Koordinatensystem in mehrere Regionen unterteilt wird. Auch die Patentschrift AU 733 187 B2 befasst sich mit der regionenspezifischen Ermittlung und Bereitstellung von Korrekturdaten.

### Offenbarung der Erfindung

Der Erfindung liegt die Aufgabe zugrunde, ein Verfahren zum Betreiben eines Korrekturdienstsystems und ein Korrekturdienstsystem zu schaffen, wobei die genannten Nachteile nicht auftreten.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem ein Verfahren zum Betreiben eines Korrekturdienstsystems für ein satellitengestütztes Navigationssystem geschaffen wird, wobei das Korrekturdienstsystem mehrere bekannte und feststehende Koordinaten aufweisende Referenzstationen in einem Koordinatensystem aufweist. Dabei werden die mehreren Referenzstationen betrieben, um Satellitensignale mehrerer Satelliten des satellitengestützten Navigationssystems zu empfangen. Es wird dann mindestens ein Korrekturwert in Abhängigkeit von von mindestens einer ausgewählten Referenzstation der mehreren Referenzstationen empfangenen Satellitensignalen und den bekannten Koordinaten der mindestens einen ausgewählten Referenzstation vorgegeben und mehreren Nutzergeräten des satellitengestützten Navigationssystems zur Verfügung gestellt. Der mindestens eine Korrekturwert wird auf Plausibilität überprüft. Das erfindungsgemäße Korrekturdienstsystem teilt das Koordinatensystem in mehrere Regionen auf, in welchen die mehreren Nutzergeräte jeweils eine eigene Position in Abhängigkeit des empfangenen mindestens einen Korrekturwerts bestimmen können. Dabei wird in Abhängigkeit von der Plausibilität des mindestens einen Korrekturwerts zumindest eine bestimmte Region aus den mehreren Regionen ausgewählt, wobei der zumindest einen bestimmten Region der mindestens eine Korrekturwert zugeordnet ist. Es wird im Rahmen des erfindungsgemäßen Verfahrens mindestens ein Informationspaket erzeugt, welches zumindest Angaben über die Plausibilität des mindestens einen Korrekturwerts und die zumindest eine bestimmte Region enthält. Das mindestens eine Informationspaket wird dann zumindest einer ausgewählten Gruppe der mehreren Nutzergeräte zur Verfügung gestellt, wobei der ausgewählten Gruppe der mehreren Nutzergeräte solche Nutzergeräte zugeordnet werden, welche sich in Richtung der zumindest einen bestimmten Region bewegen. Das Verfahren weist Vorteile gegenüber dem Stand der Technik auf. Dadurch, dass das mindestens eine Informationspaket zumindest Angaben über die Plausibilität, insbesondere eine mangelnde Plausibilität, des mindestens einen Korrekturwerts und die zumindest eine bestimmte Region enthält, wird vorzugsweise die zumindest eine ausgewählte Gruppe der mehreren Nutzergeräte, welche insbesondere von einer Störung in dem satellitengestützten Navigationssystem oder dem Korrekturdienstsystem betroffen ist, welche zu einer mangelnden Plausibilität des mindestens einen Korrekturwerts führt, entsprechend informiert. Auf diese Weise wird vorzugsweise in der zumindest einen bestimmten Region mittels des mindestens einen Informationspakets eine Information über eine mangelnde Plausibilität des mindestens einen Korrekturwerts bereitgestellt, wobei der mindestens eine Korrekturwert in anderen als der zumindest einen bestimmten Region vorzugsweise weiterhin zur Positionsbestimmung genutzt wird. Es ist also insbesondere nicht erforderlich, den mindestens einen Korrekturwert mittels des mindestens einen Informationspakets in einem globalen Bereich als nicht plausibel zu kennzeichnen. Zudem ist vorzugsweise vorgesehen, das mindestens eine Informationspaket gezielt der ausgewählten Gruppe der mehreren Nutzergeräte zur Verfügung zu stellen, wobei eine Bereitstellung des mindestens einen Informationspakets an alle Nutzergeräte, insbesondere unabhängig von einer Relevanz des Informationspakets für dieselben, vermieden werden kann. Vielmehr wird vorzugsweise die Verwendung des mindestens einen Korrekturwerts lediglich für die zumindest eine bestimmte Region als kritisch gekennzeichnet, in welcher der mindestens eine Korrekturwert mit einer erhöhten Wahrscheinlichkeit insbesondere bei der ausgewählten Gruppe der mehreren Nutzergeräte zu einem fehlerhaften Ergebnis der Positionsbestimmung führt. Insgesamt kann mittels des Korrekturdienstsystems die Sicherheit, Genauigkeit und Verfügbarkeit der Positionsbestimmung durch Nutzergeräte signifikant erhöht werden.

Die mehreren Referenzstationen sind vorzugweise als stationäre Referenzstationen ausgebildet, welche insbesondere innerhalb eines globalen Netzwerks und/oder innerhalb eines lokalen Netzwerks von Referenzstationen angeordnet sind. Vorzugsweise sind die mehreren Nutzergeräte jeweils als Navigationseinrichtung in einem Kraftfahrzeug, Mobiltelefon, Tablet-Computer, Wearable, einer Mobileinheit oder in anderer Form ausgebildet. Der mindestens eine Korrekturwert wird vorzugsweise zur Kompensation von Fehlern innerhalb des Korrekturdienstsystems und/oder des satellitengestützten Navigationssystems verwendet, welche sich insbesondere nur lokal oder auf eine bestimmte Region auswirken. Vorzugsweise wird der mindestens eine Korrekturwert zur Kompensation ionosphärischer und/oder troposphärischer Störungen insbesondere in dem satellitengestützten Navigationssystem verwendet, wobei insbesondere Szintillation, Einflüsse von Sonnenwinden, Sudden lonospheric Disturbance (SID), Polar Cap Absorption (PCA), Ionosphärenstürme, und/oder Traveling Ionic Disturbances (TID) berücksichtigt werden. Vorzugsweise wird jeder einzelnen Störung mindestens ein Korrekturwert zugeordnet, wobei insbesondere derartigen atmosphärischen Störungen ein bestimmter Korrekturwert zugeordnet wird. Anderen Arten von Störungen werden vorzugsweise weitere Korrekturwerte zugeordnet. Insgesamt werden vorzugsweise jeder einzelnen Störung oder jeder Gruppe von Störungen jeweils mindestens ein Korrekturwert zugeordnet. Es ist insbesondere möglich, dass der empfangene mindestens eine Korrekturwert durch die mehreren Nutzergeräte jeweils weiterverarbeitet wird, wobei die mehreren Nutzergeräte jeweils eine eigene Position in Abhängigkeit des weiterverarbeiteten Korrekturwerts bestimmen können. Eine mangelnde Plausibilität des mindestens einen Korrekturwerts ergibt sich insbesondere dann, wenn Defekte an einer oder mehreren der Referenzstationen vorliegen, die bekannten und feststehenden Koordinaten einer oder mehrerer der Referenzstationen beispielsweise aufgrund eines Erdbebens verändert wurden oder Probleme in Datenverarbeitungen, welche insbesondere zur Ermittlung des mindestens einen Korrekturwerts verwendet werden, vorliegen. Eine mangelnde Plausibilität des mindestens einen Korrekturwerts kann insbesondere auch in Zusammenhang mit Störungen in der Ionosphäre und/oder der Troposphäre stehen. Es wird vorzugsweise mittels des mindestens einen Informationspakets der mindestens eine Korrekturwert als nicht plausibel für die zumindest eine bestimmte Region gekennzeichnet. Die zumindest eine bestimmte Region kann dann insbesondere in Zusammenhang mit einer defekten Referenzstation, fehlerhaften bekannten und feststehenden Koordinaten einer Referenzstation oder einer fehlerhaften Datenverarbeitung stehen. Bei einer bevorzugten Ausführungsform des erfindungsgemäßen Verfahrens werden eine oder mehrere Referenzstationen der mehreren Referenzstationen auf eine Plausibilität von Korrekturwerten überprüft, welche in Abhängigkeit von von der jeweiligen Referenzstation bereitgestellten Daten - insbesondere mittels einer Datenverarbeitung - erzeugt werden. Die mehreren Regionen sind vorzugsweise geographische Regionen, mithin Bereiche in dem Koordinatensystem. Vorzugsweise enthält das mindestens eine Informationspaket Angaben über die zumindest eine bestimmte Region, wobei insbesondere in dem mindestens einen Informationspaket ein entsprechender Bereich in dem Koordinatensystem angegeben wird. Das mindestens eine Informationspaket wird vorzugsweise einer ausgewählten Gruppe mit mehr als einem Nutzergerät der mehreren Nutzergeräte zur Verfügung gestellt. Vorzugsweise wird das mindestens eine Informationspaket zusammen mit dem mindestens einen Korrekturwert insbesondere der ausgewählten Gruppe der mehreren Nutzergeräte zur Verfügung gestellt, wobei vorzugsweise ein gemeinsamer Datenstrom zur Übertragung des mindestens einen Korrekturwerts und des mindestens einen Informationspakets erzeugt wird. Alternativ ist es vorzugsweise vorgesehen, dass das mindestens eine Informationspaket allen Nutzergeräten des satellitengestützten Navigationssystems zur Vefügung gestellt wird.

Gemäß einer bevorzugten Ausführungsform des erfindungsgemäßen Verfahrens werden die mehreren Referenzstationen jeweils zumindest einer der mehreren Regionen zugeordnet. Insbesondere wird dann eine der mehreren Referenzstationen mehr als einer der mehreren Regionen zugeordnet, wenn sich zwei oder mehr der mehreren Regionen überschneiden, wobei sich innerhalb des Schnittbereichs diese Referenzstation befindet. Vorzugsweise wird der mindestens eine Korrekturwert in Abhängigkeit von der mindestens einen ausgewählten Referenzstation, mittels welcher der mindestens eine Korrekturwert - beispielsweise mittels einer Datenverarbeitung - ermittelt wird, der zumindest einen bestimmten Region zugeordnet. Auf diese Weise kann eine einfache und sichere Ermittlung einer oder mehrerer Regionen, in welcher Störungen bei der Positionsbestimmung mit einer erhöhten Wahrscheinlichkeit zu erwarten sind, realisiert werden.

Vorzugsweise wird die zumindest eine bestimmte Region in Abhängigkeit von den bekannten und feststehenden Koordinaten der mindestens einen ausgewählten Referenzstation bestimmt. Insbesondere kann die zumindest eine bestimmte Region ein Gebiet sein, welches die mindestens eine ausgewählte Referenzstation umgibt. Den bekannten und feststehenden Koordinaten ist vorzugsweise eine geographische Lage der mindestens einen ausgewählten Referenzstation zugeordnet. Besonders bevorzugt ist diese geographische Lage ein Gebiet, in welchem mittels der mindestens einen Referenzstation Korrekturwerte ermittelt werden, mittels welcher eine Positionsbestimmung von Nutzergeräten zumindest verbessert oder erst ermöglicht wird. Auf diese Weise wird eine einfache und sichere Ermittlung einer oder mehrerer Regionen, in welchen Beeinträchtigungen der Positionsbestimmung zu erwarten sind, ermöglicht.

Weiterhin ist es bevorzugt vorgesehen, dass der ausgewählten Gruppe der mehreren Nutzergeräte solche Nutzergeräte zugeordnet werden, welche sich in der zumindest einen bestimmten Region befinden. Erfindungsgemäß ist vorgesehen, dass der ausgewählten Gruppe der mehreren Nutzergeräte solche Nutzergeräte zugeordnet werden, welche sich in Richtung der zumindest einen bestimmten Region bewegen. Insbesondere werden der ausgewählten Gruppe der mehreren Nutzergeräte solche Nutzergeräte zugeordnet, für welche die Plausibilität des mindestens einen Korrekturwerts relevant für deren Positionsbestimmung ist. Es kann also in vorteilhafter Weise das mindestens eine Informationspaket denjenigen Nutzergeräten bereitgestellt werden, für welche dasselbe bei deren Positionsbestimmung relevant ist.

Gemäß einer weiteren bevorzugten Ausführungsform des Verfahrens enthält das mindestens eine Informationspaket eine erste Nutzungsempfehlung für die ausgewählte Gruppe der mehreren Nutzergeräte, um die ausgewählte Gruppe der mehreren Nutzergeräte anzuweisen, bei der Bestimmung der jeweils eigenen Position die Plausibilität des mindestens einen Korrekturwerts, insbesondere eine mangelnde Plausibilität desselben, zu berücksichtigen. Vorzugsweise ist vorgesehen, dass die ausgewählte Gruppe der mehreren Nutzergeräte angewiesen wird, die Bestimmung der jeweils eigenen Position ohne den mindestens einen Korrekturwert durchzuführen.

Im Rahmen eines ebenfalls beanspruchten Verfahrens zum Betreiben eines satellitengestützten Navigationssystems entscheidet vorzugsweise ein Nutzergerät der ausgewählten Gruppe der mehreren Nutzergeräte, insbesondere ein Bediener desselben, jeweils in Abhängigkeit von dem mindestens einen Informationspaket, ob oder inwieweit der mindestens eine Korrekturwert bei der Bestimmung der jeweils eigenen Position verwendet wird. Insbesondere ist es auch möglich, den mindestens einen Korrekturwert mit einer verringerten Gewichtung, vorzugsweise in Abhängigkeit von einer zu erwartenden Genauigkeit desselben, bei der Positionsbestimmung zu verwenden. Alternativ wird dabei bevorzugt, dass über die Verwendung des mindestens einen Korrekturwerts bei der Bestimmung der jeweils eigenen Position eines Nutzergeräts der ausgewählten Gruppe der mehreren Nutzergeräte in Abhängigkeit von dem mindestens einen Informationspaket automatisiert oder teilautomatisiert entschieden wird. Vorzugsweise wird dabei der mindestens eine Korrekturwert bei der Bestimmung der jeweils eigenen Position eines Nutzergeräts der ausgewählten Gruppe der mehreren Nutzergeräte ausgeschlossen oder zumindest mit einer verringerten Gewichtung verwendet. Besonders bevorzugt wird dabei die Verwendung des mindestens einen Korrekturwerts bei der Bestimmung der jeweils eigenen Position eines Nutzergeräts der ausgewählten Gruppe der mehreren Nutzergeräte in der zumindest einen bestimmten Region ausgesetzt oder zumindest mit einer verringerten Gewichtung durchgeführt. Weiterhin wird dabei bevorzugt, dass in Abhängigkeit von dem mindestens einen Informationspaket die ausgewählte Gruppe der mehreren Nutzergeräte eine Verwendung von ausgewählten Bahn- oder Uhrendaten der mehreren Satelliten, Satellitensignalen der mehreren Satelliten, oder von anderen zur Positionsbestimmung erforderlichen Eingangsgrößen aussetzt. Auf diese Weise wird die Sicherheit und Genauigkeit der Positionsbestimmung durch die Nutzergeräte insbesondere in dem satellitengestützten Navigationssystem effektiv gesteigert.

Bevorzugt werden bei dem Verfahren zum Betreiben eines Korrekturdienstsystems mindestens ein ausgewählter Satellit der mehreren Satelliten des satellitengestützten Navigationssystems und/oder mindestens eine ausgewählte Konstellation der mehreren Satelliten des satellitengestützten Navigationssystems ermittelt, welche dem mindestens einen Korrekturwert zugeordnet sind. Vorzugsweise enthält das mindestens eine Informationspaket dabei eine zweite Nutzungsempfehlung für die ausgewählte Gruppe der mehreren Nutzergeräte, um die ausgewählte Gruppe der mehreren Nutzergeräte anzuweisen, bei der Bestimmung der jeweils eigenen Position die Plausibilität von dem mindestens einen ausgewählten Satelliten und/oder der mindestens einen ausgewählten Konstellation zugeordneten Korrekturwerten zu berücksichtigen. Die mindestens eine ausgewählte Konstellation der mehreren Satelliten kann insbesondere eine Gruppe der mehreren Satelliten sein. Die Zuordnung des mindestens einen ausgewählten Satelliten und/oder der mindestens einen ausgewählten Konstellation zu dem mindestens einen Korrekturwert ergibt sich insbesondere über die Satellitensignale, welche mittels des mindestens einen ausgewählten Satelliten und/oder der mindestens einen ausgewählten Konstellation zur Bestimmung des mindestens einen Korrekturwerts bereitgestellt werden. Insbesondere handelt es sich bei dem mindestens einen ausgewählten Satelliten oder der mindestens einen ausgewählten Konstellation um Satelliten oder Konstellationen, welche fehlerbehaftet sind und - beispielsweise über eine Aussendung oder Weiterleitung fehlerhafter Satellitensignale - eine mangelnde Plausibilität der in Abhängigkeit dieser Satellitensignale ermittelten Korrekturwerte bewirken. Vorzugsweise ist es vorgesehen, die dem mindestens einen ausgewählten Satelliten und/oder der mindestens einen ausgewählten Konstellation zugeordneten Korrekturwerte zumindest mit einer verringerten Gewichtung bei der Positionsbestimmung zu verwenden oder eine Verwendung derselben vollständig auszusetzen.

Im Rahmen des ebenfalls beanspruchten Verfahrens zum Betreiben eines satellitengestützten Navigationssystems wird vorzugsweise die Verwendung des mindestens einen ausgewählten Satelliten und/oder der mindestens einen ausgewählten Konstellation in der zumindest einen bestimmten Region ausgesetzt. Vorzugsweise wird dabei die Verwendung des mindestens einen ausgewählten Satelliten und/oder der mindestens einen ausgewählten Konstellation bei der Bestimmung der jeweils eigenen Position der ausgewählten Gruppe der mehreren Nutzergeräte global ausgesetzt. Ein Aussetzen der Verwendung des mindestens einen ausgewählten Satelliten und/oder der mindestens einen ausgewählten Konstellation wird dabei vorzugsweise manuell, teilautomatisiert oder automatisiert durchgeführt. Auf diese Weise wird die Sicherheit und Genauigkeit bei der Positionsbestimmung durch die Nutzergeräte insbesondere in dem satellitengestützten Navigationssystem effektiv erhöht.

Gemäß einer bevorzugten Ausführungsform des Verfahrens zum Betreiben eines Korrekturdienstsystems werden atmosphärische Störungen, welche das Senden der dem mindestens einen Korrekturwert zugeordneten Satellitensignale beeinflussen, ermittelt. Dabei werden vorzugsweise durch das mindestens eine Informationspaket Angaben zu den atmosphärischen Störungen der ausgewählten Gruppe der mehreren Nutzergeräte zur Verfügung gestellt. Die dem mindestens einen Korrekturwert zugeordneten Satellitensignale sind vorzugsweise Satellitensignale, welche von einem oder mehreren Satelliten der mehreren Satelliten an die mindestens eine ausgewählte Referenzstation gesendet werden, wobei in Abhängigkeit dieser Satellitensignale der mindestens eine Korrekturwert ermittelt wird. Im Rahmen des erfindungsgemäßen Verfahrens umfasst das mindestens eine Informationspaket insbesondere Angaben zu einer räumlichen Verteilung, einem Zeitpunkt, und/oder einer Zeitdauer von insbesondere atmosphärischen Störungen. Es kann auf diese Weise der ausgewählten Gruppe der mehreren Nutzergeräte eine valide Grundlage zur Entscheidung über die Verwendung des mindestens einen Korrekturwerts zur Positionsbestimmung bereitgestellt werden.

Vorzugsweise wird der mindestens eine Korrekturwert in Abhängigkeit von von zumindest mehreren ausgewählten Referenzstationen der mehreren Referenzstationen empfangenen Satellitensignalen und den bekannten Koordinaten der zumindest mehreren ausgewählten Referenzstationen vorgegeben und den mehreren Nutzergeräten des satellitengestützten Navigationsssystems zur Verfügung gestellt. Weiterhin wird bevorzugt der mindestens eine Korrekturwert in Abhängigkeit von von allen Referenzstationen empfangenen Satellitensignalen und den bekannten Koordinaten aller Referenzstationen vorgegeben und den mehreren Nutzergeräten des satellitengestützten Navigationsssystems zur Verfügung gestellt.

Weiterhin ist es bevorzugt vorgesehen, dass das mindestens eine Informationspaket mittels mindestens eines Kommunikationssatelliten, alternativ oder zusätzlich mittels eines Mobilfunknetzes der ausgewählten Gruppe der mehreren Nutzergeräte zur Verfügung gestellt wird. Der mindestens eine Kommunikationssatellit ist vorzugsweise ein Satellit der mehreren Satelliten des satellitengeschützten Navigationssystems. Alternativ kann der Kommunikationssatellit auch verschieden von den mehreren Satelliten des satellitengestützten Navigationssystems sein. Mittels des Mobilfunknetzes wird vorzugsweise eine Zwei-Wege-Kommunikation zwischen der ausgewählten Gruppe der mehreren Nutzergeräte und einer Einrichtung, welche das mindestens eine Informationpaket erzeugt, insbesondere eine Datenverarbeitung, realisiert. Mittels eines solchermaßen ausgebildeten Mobilfunknetzes ist es insbesondere möglich, bestimmte Navigationsdaten, beispielsweise den Stand- oder Zielort, eines jeweiligen Nutzergeräts der mehreren Nutzergeräte auszuwerten und in Abhängigkeit dessen das mindestens eine Informationspaket gezielt Nutzergeräten der ausgewählten Gruppe der mehreren Nutzergeräte zur Verfügung zu stellen. Hierdurch kann insbesondere vermieden werden, das mindestens eine Informationspaket Nutzergeräten zur Verfügung zu stellen, für welche dieses keine Relevanz besitzt. Durch Nutzung bestehender Resourcen, insbesondere existierender Satelliten und/oder existierender Mobilfunknetze, zum Bereitstellen des mindestens einen Informationspakets für die ausgewählte Gruppe der mehreren Nutzergeräte können Kosten des erfindungsgemäßen Verfahrens reduziert werden.

Das erfindungsgemäße Verfahren zum Betreiben eines satellitengestützten Navigationssystems mit den Merkmalen des Anspruchs 10 führt ebenfalls zu den oben genannten Vorteilen. Das satellitengestützte Navigationssystem weist dabei mehrere Satelliten, mehrere Nutzergeräte und ein Korrekturdienstsystem mit mehreren bekannte und feststehende Koordinaten aufweisenden Referenzstationen in einem Koordinatensystem auf. Im Rahmen des Verfahrens werden die mehreren Referenzstationen betrieben, um Satellitensignale der mehreren Satelliten des satellitengestützten Navigationssystems zu empfangen. Dabei wird mindestens ein Korrekturwert in Abhängigkeit von von mindestens einer ausgewählten Referenzstation der mehreren Referenzstationen empfangenen Satellitensignalen und den bekannten Koordinaten der mindestens einen ausgewählten Referenzstation vorgegeben und den mehreren Nutzergeräten des satellitengestützten Navigationssystems zur Verfügung gestellt. Der mindestens eine Korrekturwert wird dabei auf Plausibilität überprüft. Das Korrekturdienstsystem teilt das Koordinatensystem in mehrere Regionen auf, in welchen die mehreren Nutzergeräte jeweils eine eigene Position in Abhängigkeit des empfangenen mindestens einen Korrekturwerts bestimmen. Das Korrekturdienstsystem wird dabei durch das zuvor beschriebene erfindungsgemäße Verfahren zum Betreiben eines Korrekturdienstsystems betrieben.

Vorzugsweise wird mittels des oben beschriebenen Verfahrens zum Betreiben eines Korrekturdienstsystems ein Korrekturdienstsystem der nachfolgend beschriebenen Art betrieben.

Das erfindungsgemäße Korrekturdienstsystem mit den Merkmalen des Anspruchs 11 führt ebenfalls zu den oben genannten Vorteilen. Es weist mehrere bekannte und feststehende Koordinaten aufweisende Referenzstationen auf. Das erfindungsgemäße Korrekturdienstsystem ist dazu ausgebildet, ein Verfahren zum Betreiben eines Korrekturdienstsystems der oben beschriebenen Art durchzuführen. Hierzu sind insbesondere zur Durchführung des erfindungsgemäßen Verfahrens programmierte Steuergeräte vorhanden, die vorzugsweise zur Ansteuerung der mehreren Referenzstationen des erfindungsgemäßen Korrekturdienstsystems dem jeweiligen Gerät zugeordnet sind. Vorzugsweise sind zur Durchführung des erfindungsgemäßen Verfahrens programmierte Steuergeräte zur Ansteuerung weiterer für das Verfahren erforderlicher oder vorteilhafter Einrichtungen des erfindungsgemäßen Korrekturdienstsystems vorhanden.

Vorzugsweise wird mittels des oben beschriebenen Verfahrens zum Betreiben eines satellitengestützten Navigationssystems ein satellitengestütztes Navigationssystem der nachfolgend beschriebenen Art betrieben.

Das erfindungsgemäße satellitengestützte Navigationssystem mit den Merkmalen des Anspruchs 12 führt ebenfalls zu den oben genannten Vorteilen. Es weist mehrere Satelliten, mehrere Nutzergeräte und mindestens ein Korrekturdienstsystem der oben beschriebenen Art auf. Das erfindungsgemäße satellitengestützte Navigationssystem ist dazu ausgebildet, ein Verfahren zum Betreiben eines satellitengestützten Navigationssystems der oben beschriebenen Art durchzuführen. Hierzu sind insbesondere zur Durchführung des erfindungsgemäßen Verfahrens programmierte Steuergeräte vorhanden, die vorzugsweise zur Ansteuerung der mehreren Satelliten, der mehreren Nutzergeräte und der mehreren Referenzstationen des erfindungsgemäßen mindestens einen Korrekturdienstsystems dem jeweiligen Gerät zugeordnet sind. Vorzugsweise sind zur Durchführung des erfindungsgemäßen Verfahrens programmierte Steuergeräte zur Ansteuerung weiterer für das Verfahren erforderlicher oder vorteilhafter Einrichtungen des erfindungsgemäßen satellitengestützten Navigationssystems vorhanden.

Die Erfindung wird im Folgenden anhand der Zeichnung näher erläutert. Dabei zeigen:
- Figur 1: eine schematische Darstellung eines Ausführungsbeispiels eines vorteilhaften Korrekturdienstsystems, und
- Figur 2: eine schematische Darstellung von Regionen in Zusammenhang mit dem Ausführungsbeispiel des vorteilhaften Korrekturdienstsystems.

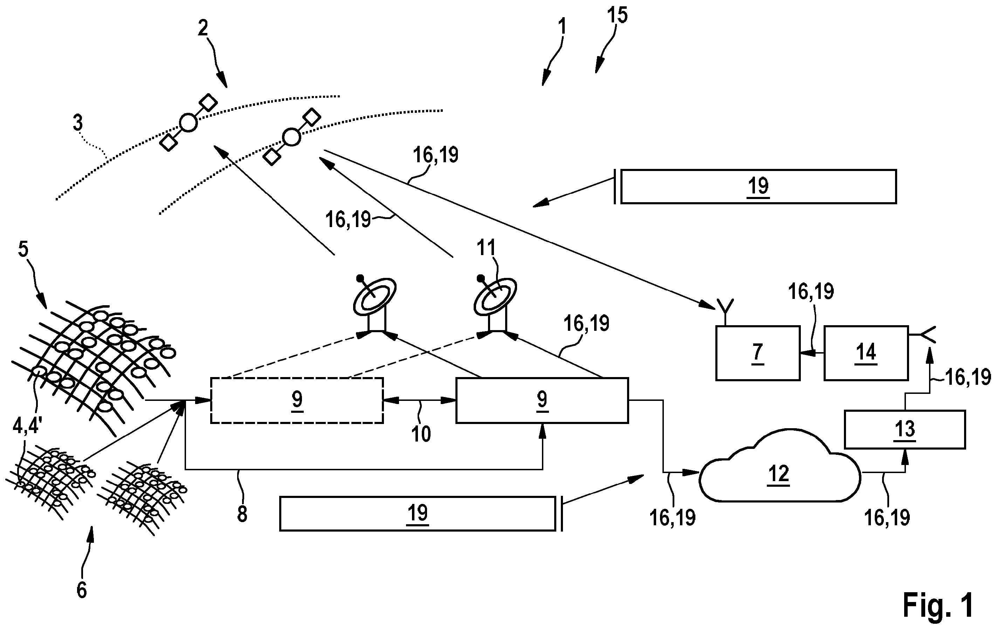

Figur 1 zeigt eine schematische Darstellung eines Ausführungsbeispiels eines vorteilhaften Korrekturdienstsystems 1. Das Korrekturdienstsystem 1 befindet sich in einem Koordinatensystem. Das Korrekturdienstsystem 1 weist vorzugsweise mindestens einen - hier zwei - Kommunikationsatelliten 2 auf. Die Kommunikationssatelliten 2 bewegen sich jeweils auf einer Satellitenbahn 3. Es ist bevorzugt vorgesehen, dass ein Kommunikationssatellit 2 jeweils einem geographischen Gebiet, insbesondere einem Kontinent, zugeordnet ist.

Weiterhin weist das Korrekturdienstsystem 1 mehrere bekannte und feststehende Koordinaten aufweisende Referenzstationen 4 auf. Die mehreren Referenzstationen 4 sind bei dem in Figur 1 dargestellten Ausführungsbeispiel insbesondere Referenzstationen in einem globalen Netzwerk 5 von Referenzstationen 4 und Referenzstationen in vorzugsweise mehreren lokalen Netzwerken 6 von Referenzstationen 4.

Weiterhin ist in Figur 1 ein Nutzergerät 7 eines satellitengestützten Navigationssystems dargestellt, welches beispielhaft für mehrere Nutzergeräte 7 des satellitengestützten Navigationssystems steht. Bei dem in Figur 1 dargestellten Ausführungsbeispiel werden mittels der Referenzstationen 4 Datenpakete 8 mit Informationen zur Ermittlung von Korrekturwerten oder mit bereits ermittelten Korrekturwerten einer Datenverarbeitung 9 - hier zwei Datenverarbeitungen 9 - zur Verfügung gestellt. Vorzugsweise wird eine Kommunikation zwischen den Datenverarbeitungen 9 untereinander realisiert, wobei vorzugsweise die Datenpakete 8 auf eine Konsistenz überprüft werden, dargestellt durch den Pfeil 10. Die Datenverarbeitungen 9 sind jeweils mit Sendestationen 11, hier jeweils zwei Sendestationen 11, kommunikationsverbunden. Mittels der Sendestationen 11 wird vorzugsweise jeweils eine Kommunikationsverbindung zwischen den Datenverarbeitungen 9 und den Kommunikationssatelliten 2 realisiert. Die Datenverarbeitungen 9 weisen bevorzugt jeweils eine Kommunikationsverbindung mit einem Backend-Server 12 auf. Der Backend-Server 12 ist bei diesem Ausführungsbeispiel mit einem Mobilfunknetz 13 kommunikationsverbunden. Das Mobilfunknetz 13 ist hier mit einem Kommunikationsmodul 14, welches vorzugsweise jeweils einem der mehreren Nutzergeräte 7 zugeordnet ist, insbesondere drahtlos kommunikationsverbunden. Bei diesem Ausführungsbeispiel steht ein Kommunikationsmodul 14 jeweils in Kommunikationsverbindung mit einem der mehreren Nutzergeräte 7. Die mehreren Nutzergeräte 7 sind vorzugsweise jeweils mit den Kommunikationssatelliten 2 kommunikationsverbindbar, besonders bevorzugt kommunikationsverbunden.

Weiterhin ist in Figur 1 das satellitengestützte Navigationssystem 15 dargestellt, welches mehrere - hier nicht dargestellte - Satelliten, die mehreren Nutzergeräte 7 und das mindestens eine - hier eine - Korrekturdienstsystem 1 aufweist.

Das Korrekturdienstsystem 1 ist dazu ausgebildet, ein Verfahren zum Betreiben eines Korrekturdienstsystems 1 der nachfolgend beschriebenen Art durchzuführen.

Mittels des vorteilhaften Verfahrens zum Betreiben eines Korrekturdienstsystems 1 wird das Korrekturdienstsystem 1 mit den mehreren bekannte und feststehende Koordinaten aufweisenden Referenzstationen 4 in einem Koordinatensystem betrieben. Dabei werden die mehreren Referenzstationen 4 betrieben, um Satellitensignale der mehreren Satelliten des satellitengestützten Navigationssystems 15 zu empfangen. Die mehreren Satelliten sind bei einem weiteren - hier nicht dargestellten - bevorzugten Ausführungsbeispiel als Kommunikationssatelliten 2 ausgebildet. Dabei wird mindestens ein Korrekturwert 16 in Abhängigkeit von von mindestens einer ausgewählten Referenzstation 4' der mehreren Referenzstationen 4 empfangenen Satellitensignalen und den bekannten Koordinaten der mindestens einen ausgewählten Referenzstation 4' vorgegeben und den mehreren Nutzergeräten 7 des satellitengestützten Navigationssystems 15 zur Verfügung gestellt. Bei dem in Figur 1 dargestellten Ausführungsbeispiel des Korrekturdienstsystems 1 wird der mindestens eine Korrekturwert 16 mittels der Datenverarbeitungen 9 in Abhängigkeit der von den Referenzstationen 4 bereitgestellten Datenpakete 8 ermittelt. Der mindestens eine Korrekturwert 16 wird über die Sendestationen 11 und die Kommunikationssatelliten 2 den mehreren Nutzergeräten 7 zur Verfügung gestellt, insbesondere an die mehreren Nutzergeräte 7 gesendet. Es ist insbesondere möglich, dass die mehreren Nutzergeräte 7 den mindestens einen Korrekturwert 16 jeweils weiterverarbeiten, wobei in Abhängigkeit des weiterverarbeiteten Korrekturwerts 16 eine Bestimmung der jeweils eigenen Position der mehreren Nutzergeräte 7 durchgeführt wird. Bei diesem Ausführungsbeispiel wird vorzugsweise parallel der mindestens eine Korrekturwert 16 den mehreren Nutzergeräten 7 über den Backend-Server 12, das Mobilfunknetz 13 und das den mehreren Nutzergeräten 7 jeweils zugeordnete Kommunikationsmodul 14 zur Verfügung gestellt, insbesondere zugesendet. Vorzugsweise empfangen die mehreren Nutzergeräte 7 den mindestens einen Korrekturwert 16 entweder von den Kommunikationssatelliten 2 oder über das Mobilfunknetz 13, sodass eine sichere Versorgung der mehreren Nutzergeräte 7 mit dem mindestens einen Korrekturwert 16 sichergestellt wird. Der mindestens eine Korrekturwert 16 wird im Rahmen des vorteilhaften Verfahrens auf Plausibilität überprüft.

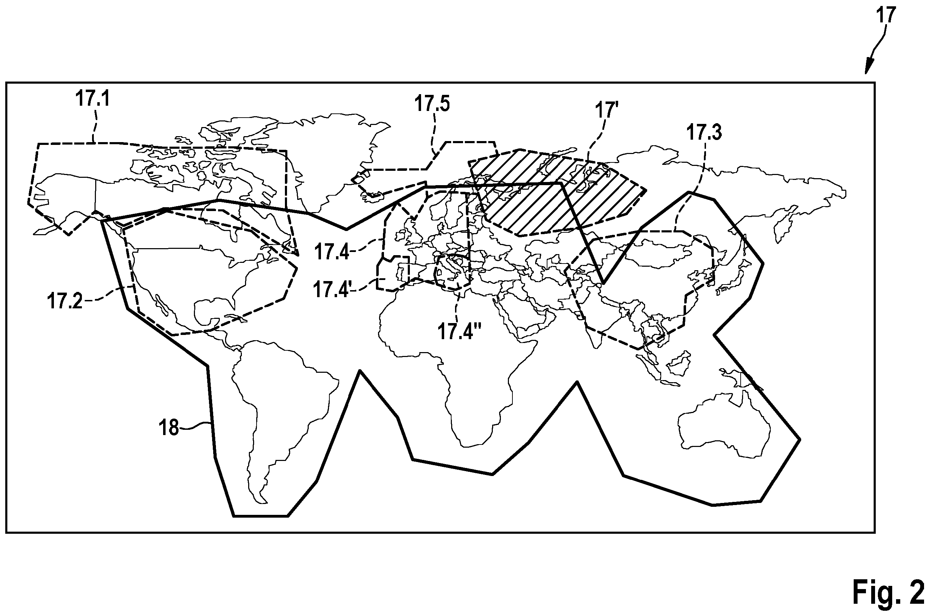

Figur 2 zeigt eine schematische Darstellung von Regionen 17 in Zusammenhang mit dem vorteilhaften Korrekturdienstsystem 1 und dem vorteilhaften satellitengestützten Navigationssystem 15. Figur 2 zeigt dabei eine erste Region 17.1, eine zweite Region 17.2, eine dritte Region 17.3, eine vierte Region 17.4 und eine fünfte Region 17.5. Vorzugsweise ist vorgesehen, innerhalb einer Region 17 eine oder mehrere Teilregionen vorzusehen. Die vierte Region 17.4 weist hier entsprechend zwei Teilregionen 17.4' und 17.4" auf. Weiterhin ist vorzugsweise ein globaler Bereich 18 gemäß Figur 2 vorgesehen. Der globale Bereich 18 umfasst bei dem hier dargestellten Ausführungsbeispiel zumindest Teile der ersten Region 17.1, der zweiten Region 17.2, der dritten Region 17.3, der vierten Region 17.4 und der fünften Region 17.5. Figur 2 zeigt darüber hinaus eine als bestimmte Region 17' ausgebildete Region 17, welche insbesondere von einer Störung in der Ionosphäre und/oder der Troposphäre beeinträchtigt ist. Insbesondere kann eine Störung in der Ionosphäre und/oder der Troposphäre vorliegen und eine Übertragung von Satellitensignalen zu Nutzergeräten 7 beeinträchtigen. Insbesondere kann eine solche Störung eine Erzeugung und/oder Bereitstellung des mindestens einen Korrekturwerts 16 insbesondere für die bestimmte Region 17' beeinträchtigen. Alternativ oder zusätzlich kann eine Störung in Form eines Defekts an einer Referenzstation 4, einer Veränderung der bekannten und feststehenden Koordinaten einer Referenzstation 4, beispielsweise aufgrund eines Erdbebens, oder in Form von Problemen in einer Datenverarbeitung 9 vorliegen. Insbesondere wird dadurch eine Erzeugung und/oder Bereitstellung des mindestens einen Korrekturwerts 16 insbesondere für die bestimmte Region 17' beeinträchtigt. Letztlich ist dann insbesondere eine Bereitstellung vorzugsweise korrekter Korrekturwerte 16 zur Positionsbestimmung in der zumindest einen bestimmten Region 17' nicht oder nicht vollständig möglich.

Das Korrekturdienstsystem 1 teilt das Koordinatensystem in mehrere der angesprochenen Regionen 17 auf, in welchen die mehreren Nutzergeräte 7 jeweils eine eigene Position in Abhängigkeit des empfangenen mindestens einen Korrekturwerts 16 bestimmen können, vorzugsweise bestimmen. In Abhängigkeit von der Plausibilität des mindestens einen Korrekturwerts 16, insbesondere wenn der mindestens eine Korrekturwert 16 eine mangelnde Plausibilität aufweist, wird die zumindest eine bestimmte Region 17' aus den mehreren Regionen 17 ausgewählt, wobei der zumindest einen bestimmten Region 17' der mindestens eine Korrekturwert 16 zugeordnet ist. Es wird im Rahmen des vorteilhaften Verfahrens zum Betreiben eines Korrekturdienstsystems 1 mindestens ein Informationspaket 19 - welches in Figur 1 schematisch dargestellt ist - erzeugt, welches zumindest Angaben über die Plausibilität, insbesondere eine mangelnde Plausibilität, des mindestens einen Korrekturwerts 16 und die zumindest eine bestimmte Region 17' enthält. Hierbei wird das mindestens eine Informationspaket 19 zumindest einer ausgewählten Gruppe der mehreren Nutzergeräte 7 zur Verfügung gestellt.

Bei dem in Figur 1 dargestellten Ausführungsbeispiel wird das mindestens eine Informationspaket 19 zusammen mit dem mindestens einen Korrekturwert 16 der ausgewählten Gruppe der mehreren Nutzergeräte 7 zur Verfügung gestellt. Das mindestens eine Informationspaket 19 wird bei dem in Figur 1 dargestellten Ausführungsbeispiel vorzugsweise mittels der Datenverarbeitungen 9 erzeugt. Vorzugsweise wird das mindestens eine Informationspaket 19 über die Sendestationen 11 und die Kommunikationssatelliten 2 der ausgewählten Gruppe der mehreren Nutzergeräte 7 zur Verfügung gestellt, insbesondere der ausgewählten Gruppe der mehreren Nutzergeräte 7 zugesendet. Alternativ oder zusätzlich wird vorzugsweise das mindestens eine Informationspaket 19 der ausgewählten Gruppe der mehreren Nutzergeräte 7 über den Backend-Server 12, das Mobilfunknetz 13 und das Kommunikationsmodul 14 zur Verfügung gestellt, insbesondere der ausgewählten Gruppe der mehreren Nutzergeräte 7 zugesendet. Vorzugsweise wird das mindestens eine Informationspaket 19 in einem gemeinsamen Datenstrom mit dem mindestens einen Korrekturwert 16 der ausgewählten Gruppe der mehreren Nutzergeräte 7 zur Verfügung gestellt, besonders bevorzugt zugesendet.

Bei einem anderen bevorzugten Ausführungsbeispiel wird das mindestens eine Informationspaket 19 in anderer Weise, insbesondere nicht mittels einer Datenverarbeitung 9, erzeugt. Das mindestens eine Informationspaket 19 wird vorzugsweise getrennt von dem mindestens einen Korrekturwert 16 der ausgewählten Gruppe der mehreren Nutzergeräte 7 zur Verfügung gestellt. Vorzugsweise werden die mehreren Referenzstationen 4 jeweils zumindest einer der mehreren Regionen 17 zugeordnet, wobei der mindestens eine Korrekturwert 16 in Abhängigkeit von der mindestens einen ausgewählten Referenzstation 4', mittels welcher der mindestens eine Korrekturwert 16 ermittelt wird, der zumindest einen bestimmten Region 17' zugeordnet.

Weiterhin ist bevorzugt vorgesehen, dass die zumindest eine bestimmte Region 17' in Abhängigkeit von den bekannten und feststehenden Koordinaten der mindestens einen ausgewählten Referenzstation 4' bestimmt wird.

Vorzugsweise werden der ausgewählten Gruppe der mehreren Nutzergeräte 7 solche Nutzergeräte 7 zugeordnet, welche sich in der zumindest einen bestimmten Region 17' befinden. Erfindungsgemäß ist vorgesehen, dass der ausgewählten Gruppe der mehreren Nutzergeräte solche Nutzergeräte zugeordnet werden, welche sich in Richtung der zumindest einen bestimmten Region 17' bewegen. Vorzugsweise ist es vorgesehen, mittels des mindestens einen Informationspakets 19 eine Plausibilität - insbesondere eine mangelnde Plausibilität - des mindestens einen Korrekturwerts 16 jeweils regionenspezifisch zu kennzeichnen. Es wird dann vorzugsweise vermieden, den mindestens einen Korrekturwert 16 in dem globalen Bereich 18 - insbesondere nicht differenziert nach Regionen - als nicht plausibel zu kennzeichnen, sofern nicht der globale Bereich 18 als Ganzes von Störungen der beschriebenen Art betroffen ist. Alternativ oder zusätzlich ist insbesondere vorgesehen, dass das mindestens eine Informationspaket 19 nicht in dem gesamten globalen Bereich 18 den dort befindlichen mehreren Nutzergeräten 7 zur Verfügung gestellt wird, wenn nicht der globale Bereich 18 als Ganzes von Störungen der beschriebenen Art betroffen ist.

Vorzugsweise enthält das mindestens eine Informationspaket 19 eine erste Nutzungsempfehlung für die ausgewählte Gruppe der mehreren Nutzergeräte 7, um die ausgewählte Gruppe der mehreren Nutzergeräte 7 anzuweisen, bei der Bestimmung der jeweils eigenen Position die Plausibilität des mindestens einen Korrekturwerts 16, insbesondere bei einer mangelnden Plausibilität desselben, zu berücksichtigen.

Weiterhin ist bevorzugt vorgesehen, dass mindestens ein ausgewählter Satellit der mehreren Satelliten des satellitengestützten Navigationssystems 15 und/oder mindestens eine ausgewählte Konstellation der mehreren Satelliten des satellitengestützten Navigationssystems 15 ermittelt werden, welche dem mindestens einen Korrekturwert 16 zugeordnet sind. Vorzugsweise enthält das mindestens eine Informationspaket 19 eine zweite Nutzungsempfehlung für die ausgewählte Gruppe der mehreren Nutzergeräte 7, um die ausgewählte Gruppe der mehreren Nutzergeräte 7 anzuweisen, bei der Bestimmung der jeweils eigenen Position die Plausibilität von dem mindestens einen ausgewählten Satelliten und/oder der mindestens einen ausgewählten Konstellation zugeordneten Korrekturwerten zu berücksichtigen, wobei insbesondere eine Verwendung derartiger Korrekturwerte mit mangelnder Plausibilität verhindert oder mit einer verringerten Gewichtung derselben durchgeführt wird.

Weiterhin wird bevorzugt, dass atmosphärische Störungen ermittelt werden, welche das Senden der dem mindestens einen Korrekturwert 16 zugeordneten Satellitensignale beeinflussen und welche insbesondere zu einer mangelnden Plausibilität des mittels dieser Satellitensignale ermittelten mindestens einen Korrekturwerts 16 führen, wobei durch das mindestens eine Informationspaket 19 Angaben zu den atmosphärischen Störungen der ausgewählten Gruppe der mehreren Nutzergeräte 7 zur Verfügung gestellt werden.

Bei einem weiteren bevorzugten Ausführungsbeispiel ist vorgesehen, dass der mindestens eine Korrekturwert 16 in Abhängigkeit von von zumindest mehreren ausgewählten Referenzstationen 4' der mehreren Referenzstationen 4, insbesondere allen Referenzstationen 4, empfangenen Satellitensignalen und den bekannten Koordinaten der zumindest mehreren ausgewählten Referenzstationen 4', insbesondere aller Referenzstationen 4, vorgegeben und den mehreren Nutzergeräten 7 des satellitengestützten Navigationssystems 15 zur Verfügung gestellt wird.

Weiterhin ist vorzugsweise vorgesehen, dass das mindestens eine Informationspaket 19 mittels mindestens eines Kommunikationssatelliten 2 und/oder eines Mobilfunknetzes 13 der ausgewählten Gruppe der mehreren Nutzergeräte 7 zur Verfügung gestellt wird.

Das satellitengestützte Navigationssystem 15 ist dazu ausgebildet, ein Verfahren zum Betreiben eines satellitengestützten Navigationssystems 15 der nachfolgend beschriebenen Art durchzuführen.

Das satellitengestützte Navigationssystem 15 weist hierbei die mehreren Satelliten, die mehreren Nutzergeräte 7 und das Korrekturdienstsystem 1, welches die mehreren bekannte und feststehende Koordinaten aufweisenden Referenzstationen 4 in einem Koordinatensystem umfasst, auf. Im Rahmen des Verfahrens zum Betreiben eines satellitengestützten Navigationssystems 15 werden die mehreren Referenzstationen 4 betrieben, um Satellitensignale der mehreren Satelliten des satellitengestützten Navigationssystems 15 zu empfangen. Dabei wird der mindestens eine Korrekturwert 16 in Abhängigkeit von von der mindestens einen ausgewählten Referenzstation 4' der mehreren Referenzstationen 4 empfangenen Satellitensignalen und den bekannten Koordinaten der mindestens einen ausgewählten Referenzstation 4' vorgegeben und den mehreren Nutzergeräten 7 des satellitengestützten Navigationssystems 15 zur Verfügung gestellt. Dabei wird der mindestens eine Korrekturwert 16 auf Plausibilität überprüft. Im Rahmen des Verfahrens zum Betreiben eines satellitengestützten Navigationssystems 15 wird das Korrekturdienstsystem 1 mittels eines Verfahrens zum Betreiben eines Korrekturdienstsystems 1 der oben beschriebenen Art betrieben.

Insgesamt zeigt sich, dass mittels des Verfahrens zum Betreiben des Korrekturdienstsystems 1, des Verfahrens zum Betreiben des satellitengestützten Navigationssystems 15, des Korrekturdienstsystems 1 und des satellitengestützten Navigationssystems 15 die Sicherheit, Genauigkeit und Verfügbarkeit der Bestimmung der jeweiligen Position der mehreren Nutzergeräte 7 effektiv und kostengünstig erhöht werden kann.

## Patentansprüche

1. Verfahren zum Betreiben eines Korrekturdienstsystems (1) für ein satellitengestütztes Navigationssystem (15), wobei das Korrekturdienstsystem (1) mehrere bekannte und feststehende Koordinaten aufweisende Referenzstationen (4) in einem Koordinatensystem aufweist, wobei
- die mehreren Referenzstationen (4) betrieben werden, um Satellitensignale mehrerer Satelliten des satellitengestützten Navigationssystems (15) zu empfangen, wobei
- mindestens ein Korrekturwert (16) in Abhängigkeit von von mindestens einer ausgewählten Referenzstation (4') der mehreren Referenzstationen (4) empfangenen Satellitensignalen und den bekannten Koordinaten der mindestens einen ausgewählten Referenzstation (4') vorgegeben und mehreren Nutzergeräten (7) des satellitengestützten Navigationssystems (15) zur Verfügung gestellt wird, und wobei
- der mindestens eine Korrekturwert (16) auf Plausibilität überprüft wird,
**dadurch gekennzeichnet, dass**
- das Korrekturdienstsystem (1) das Koordinatensystem in mehrere Regionen (17) aufteilt, in welchen die mehreren Nutzergeräte (7) jeweils eine eigene Position in Abhängigkeit des empfangenen mindestens einen Korrekturwerts (16) bestimmen können, wobei
- in Abhängigkeit von der Plausibilität des mindestens einen Korrekturwerts (16) zumindest eine bestimmte Region (17') aus den mehreren Regionen (17) ausgewählt wird, wobei
- der zumindest einen bestimmten Region (17') der mindestens eine Korrekturwert (16) zugeordnet ist, wobei
- mindestens ein Informationspaket (19) erzeugt wird, welches zumindest Angaben über die Plausibilität des mindestens einen Korrekturwerts (16) und die zumindest eine bestimmte Region (17') enthält, und wobei
- das mindestens eine Informationspaket (19) zumindest einer ausgewählten Gruppe der mehreren Nutzergeräte (7) zur Verfügung gestellt wird, wobei der ausgewählten Gruppe der mehreren Nutzergeräte (7) solche Nutzergeräte (7) zugeordnet werden, welche sich in Richtung der zumindest einen bestimmten Region (17') bewegen.

2. Verfahren nach Anspruch 1, **dadurch gekennzeichnet, dass**
- die mehreren Referenzstationen (4) jeweils zumindest einer der mehreren Regionen (17) zugeordnet werden, wobei
- der mindestens eine Korrekturwert (16) in Abhängigkeit von der mindestens einen ausgewählten Referenzstation (4'), mittels welcher der mindestens eine Korrekturwert (16) ermittelt wird, der zumindest einen bestimmten Region (17') zugeordnet wird.

3. Verfahren nach einem der vorhergehenden Ansprüche, **dadurch gekennzeichnet, dass** die zumindest eine bestimmte Region (17') in Abhängigkeit von den bekannten und feststehenden Koordinaten der mindestens einen ausgewählten Referenzstation (4') bestimmt wird.

4. Verfahren nach einem der vorhergehenden Ansprüche, **dadurch gekennzeichnet, dass** der ausgewählten Gruppe der mehreren Nutzergeräte (7) solche Nutzergeräte (7) zugeordnet werden, welche sich in der zumindest einen bestimmten Region (17') befinden.

5. Verfahren nach einem der vorhergehenden Ansprüche, **dadurch gekennzeichnet, dass** das mindestens eine Informationspaket (19) eine erste Nutzungsempfehlung für die ausgewählte Gruppe der mehreren Nutzergeräte (7) enthält, um die ausgewählte Gruppe der mehreren Nutzergeräte (7) anzuweisen, bei der Bestimmung der jeweils eigenen Position die Plausibilität des mindestens einen Korrekturwerts (16) zu berücksichtigen.

6. Verfahren nach einem der vorhergehenden Ansprüche, **dadurch gekennzeichnet, dass**
- mindestens ein ausgewählter Satellit der mehreren Satelliten des satellitengestützten Navigationssystems (15) und/oder mindestens eine ausgewählte Konstellation der mehreren Satelliten des satellitengestützten Navigationssystems (15) ermittelt werden, welche dem mindestens einen Korrekturwert (16) zugeordnet sind, wobei
- das mindestens eine Informationspaket (19) eine zweite Nutzungsempfehlung für die ausgewählte Gruppe der mehreren Nutzergeräte (7) enthält, um die ausgewählte Gruppe der mehreren Nutzergeräte (7) anzuweisen, bei der Bestimmung der jeweils eigenen Position die Plausibilität von dem mindestens einen ausgewählten Satelliten und/oder der mindestens einen ausgewählten Konstellation zugeordneten Korrekturwerten zu berücksichtigen.

7. Verfahren nach einem der vorhergehenden Ansprüche, **dadurch gekennzeichnet, dass** atmosphärische Störungen, welche das Senden der dem mindestens einen Korrekturwert (16) zugeordneten Satellitensignale beeinflussen, ermittelt werden, wobei durch das mindestens eine Informationspaket (19) Angaben zu den atmosphärischen Störungen der ausgewählten Gruppe der mehreren Nutzergeräte (7) zur Verfügung gestellt werden.

8. Verfahren nach einem der vorhergehenden Ansprüche, **dadurch gekennzeichnet, dass** der mindestens eine Korrekturwert (16) in Abhängigkeit von von zumindest mehreren ausgewählten Referenzstationen (4') der mehreren Referenzstationen (4), insbesondere allen Referenzstationen (4), empfangenen Satellitensignalen und den bekannten Koordinaten der zumindest mehreren ausgewählten Referenzstationen (4'), insbesondere aller Referenzstationen (4), vorgegeben und den mehreren Nutzergeräten (7) des satellitengestützten Navigationssystems (15) zur Verfügung gestellt wird.

9. Verfahren nach einem der vorhergehenden Ansprüche, **dadurch gekennzeichnet, dass** das mindestens eine Informationspaket (19) mittels mindestens eines Kommunikationssatelliten (2) und/oder eines Mobilfunknetzes (13) der ausgewählten Gruppe der mehreren Nutzergeräte (7) zur Verfügung gestellt wird.

10. Verfahren zum Betreiben eines satellitengestützten Navigationssystems (15) mit mehreren Satelliten, mehreren Nutzergeräten (7) und einem Korrekturdienstsystem (1), wobei das Korrekturdienstsystem (1) mehrere bekannte und feststehende Koordinaten aufweisende Referenzstationen (4) in einem Koordinatensystem aufweist, wobei
- die mehreren Referenzstationen (4) betrieben werden, um Satellitensignale der mehreren Satelliten des satellitengestützten Navigationssystems (15) zu empfangen, wobei
- mindestens ein Korrekturwert (16) in Abhängigkeit von von mindestens einer ausgewählten Referenzstation (4') der mehreren Referenzstationen (4) empfangenen Satellitensignalen und den bekannten Koordinaten der mindestens einen ausgewählten Referenzstation (4') vorgegeben und den mehreren Nutzergeräten (7) des satellitengestützten Navigationssystems (15) zur Verfügung gestellt wird, und wobei
- der mindestens eine Korrekturwert (16) auf Plausibilität überprüft wird,
**dadurch gekennzeichnet, dass**
- das Korrekturdienstsystem (1) mittels eines Verfahrens nach einem der Ansprüche 1 bis 9 betrieben wird.

11. Korrekturdienstsystem (1), mit mehreren bekannte und feststehende Koordinaten aufweisenden Referenzstationen (4) in einem Koordinatensystem, **dadurch gekennzeichnet, dass** das Korrekturdienstsystem (1) dazu ausgebildet ist, ein Verfahren nach einem der Ansprüche 1 bis 9 durchzuführen.

12. Satellitengestütztes Navigationssystem (15), mit
- mehreren Satelliten,
- mehreren Nutzergeräten (7), und
- mindestens einem Korrekturdienstsystem (1) nach Anspruch 11.

## Claims

1. Method for operating a correction service system (1) for a satellite-based navigation system (15), the correction service system (1) having multiple reference stations (4) having known and fixed coordinates in a coordinate system, wherein
- the multiple reference stations (4) are operated to receive satellite signals from multiple satellites of the satellite-based navigation system (15), wherein
- at least one correction value (16) is predefined and made available to multiple user devices (7) of the satellite-based navigation system (15) on the basis of satellite signals received from at least one selected reference station (4') of the multiple reference stations (4) and the known coordinates of the at least one selected reference station (4'), and wherein
- the at least one correction value (16) is checked for plausibility,
**characterized in that**
- the correction service system (1) divides the coordinate system into multiple regions (17), in which each of the multiple user devices (7) can identify an individual position on the basis of the received at least one correction value (16), wherein
- the plausibility of the at least one correction value (16) is taken as a basis for selecting at least one specific region (17') from the multiple regions (17),
wherein
- the at least one specific region (17') is assigned the at least one correction value (16), wherein
- at least one information packet (19) is generated, containing at least information about the plausibility of the at least one correction value (16) and the at least one specific region (17'), and wherein
- the at least one information packet (19) is made available to at least one selected group of the multiple user devices (7), the selected group of the multiple user devices (7) being assigned such user devices (7) as move in the direction of the at least one specific region (17').

2. Method according to Claim 1, **characterized in that**
- each of the multiple reference stations (4) is assigned to at least one of the multiple regions (17), wherein
- the at least one correction value (16) is assigned to the at least one specific region (17') on the basis of the at least one selected reference station (4') by means of which the at least one correction value (16) is determined.

3. Method according to one of the preceding claims, **characterized in that** the at least one specific region (17') is identified on the basis of the known and fixed coordinates of the at least one selected reference station (4').

4. Method according to one of the preceding claims, **characterized in that** the selected group of the multiple user devices (7) is assigned such user devices (7) as are located in the at least one specific region (17').

5. Method according to one of the preceding claims, **characterized in that** the at least one information packet (19) contains a first recommendation for use for the selected group of the multiple user devices (7) in order to instruct the selected group of the multiple user devices (7) to take into account the plausibility of the at least one correction value (16) when identifying their respective positions.

6. Method according to one of the preceding claims, **characterized in that**
- at least one selected satellite of the multiple satellites of the satellite-based navigation system (15) and/or at least one selected constellation of the multiple satellites of the satellite-based navigation system (15) that are associated with the at least one correction value (16) are determined, wherein
- the at least one information packet (19) contains a second recommendation for use for the selected group of the multiple user devices (7) in order to instruct the selected group of the multiple user devices (7) to take into account the plausibility of correction values assigned to the at least one selected satellite and/or the at least one selected constellation when identifying their respective positions.

7. Method according to one of the preceding claims, **characterized in that** atmospheric interference that influences the transmission of the satellite signals associated with the at least one correction value (16) is determined, wherein the at least one information packet (19) makes information about the atmospheric interference available to the selected group of the multiple user devices (7).

8. Method according to one of the preceding claims, **characterized in that** the at least one correction value (16) is predefined and made available to the multiple user devices (7) of the satellite-based navigation system (15) on the basis of satellite signals received from at least multiple selected reference stations (4') of the multiple reference stations (4), in particular all reference stations (4), and the known coordinates of the at least multiple selected reference stations (4'), in particular all reference stations (4).

9. Method according to one of the preceding claims, **characterized in that** the at least one information packet (19) is made available to the selected group of the multiple user devices (7) by means of at least one communication satellite (2) and/or a mobile radio network (13).

10. Method for operating a satellite-based navigation system (15) having multiple satellites, multiple user devices (7) and a correction service system (1), the correction service system (1) having multiple reference stations (4) having known and fixed coordinates in a coordinate system, wherein
- the multiple reference stations (4) are operated to receive satellite signals from the multiple satellites of the satellite-based navigation system (15), wherein
- at least one correction value (16) is predefined and made available to the multiple user devices (7) of the satellite-based navigation system (15) on the basis of satellite signals received from at least one selected reference station (4') of the multiple reference stations (4) and the known coordinates of the at least one selected reference station (4'), and wherein
- the at least one correction value (16) is checked for plausibility,
**characterized in that**
- the correction service system (1) is operated by means of a method according to one of Claims 1 to 9.

11. Correction service system (1), having multiple reference stations (4) having known and fixed coordinates in a coordinate system, **characterized in that** the correction service system (1) is designed to carry out a method according to one of Claims 1 to 9.

12. Satellite-based navigation system (15), having
- multiple satellites,
- multiple user devices (7), and
- at least one correction service system (1) according to Claim 11.

## Revendications

1. Procédé de fonctionnement d'un système de service de correction (1) pour un système de navigation assisté par satellite (15), le système de service de correction (1) comprenant plusieurs stations de référence (4) présentant des coordonnées fixes et connues dans un système de coordonnées,
- les plusieurs stations de référence (4) étant exploitées pour recevoir des signaux satellite de plusieurs satellites du système de navigation assisté par satellite (15),
- au moins une valeur de correction (16) étant définie en fonction de signaux satellite reçus par au moins une station de référence (4') sélectionnée parmi les plusieurs stations de référence (4), et des coordonnées connues de l'au moins une station de référence sélectionnée (4'), et fournie à plusieurs appareils utilisateurs (7) du système de navigation assisté par satellite (15), et
- l'au moins une valeur de correction (16) étant vérifiée quant à sa plausibilité,
**caractérisé en ce que**
- le système de service de correction (1) divise le système de coordonnées en plusieurs régions (17) dans lesquelles les plusieurs appareils utilisateurs (7) peuvent déterminer respectivement une position propre en fonction de l'au moins une valeur de correction (16) reçue,
- en fonction de la plausibilité de l'au moins une valeur de correction (16), au moins une région déterminée (17') étant sélectionnée parmi les plusieurs régions (17),
- l'au moins une valeur de correction (16) étant associée à l'au moins une région déterminée (17'),
- au moins un paquet d'informations (19) étant produit, lequel contient au moins des indications concernant la plausibilité de l'au moins une valeur de correction (16) et l'au moins une région déterminée (17'), et
- l'au moins un paquet d'informations (19) étant fourni à au moins un groupe sélectionné parmi les plusieurs appareils utilisateurs (7), les appareils utilisateurs (7) qui se déplacent en direction de l'au moins une région déterminée (17') étant associés au groupe sélectionné parmi les plusieurs appareils utilisateurs (7).

2. Procédé selon la revendication 1, **caractérisé en ce que**
les plusieurs stations de référence (4) sont respectivement affectées à au moins l'une des plusieurs régions (17),
l'au moins une valeur de correction (16) étant associée à l'au moins une région déterminée (17') en fonction de l'au moins une station de référence sélectionnée (4'), au moyen de laquelle l'au moins une valeur de correction (16) est déterminée.

3. Procédé selon l'une quelconque des revendications précédentes, **caractérisé en ce que** l'au moins une région déterminée (17') est déterminée en fonction des coordonnées connues et fixes de l'au moins une station de référence sélectionnée (4').

4. Procédé selon l'une quelconque des revendications précédentes, **caractérisé en ce que** les appareils utilisateurs (7) se trouvant dans l'au moins une région déterminée (17') sont associés au groupe sélectionné parmi les plusieurs appareils utilisateurs (7).

5. Procédé selon l'une quelconque des revendications précédentes, **caractérisé en ce que** l'au moins un paquet d'informations (19) contient une première recommandation d'utilisation pour le groupe sélectionné parmi les plusieurs appareils utilisateurs (7), afin d'indiquer au groupe sélectionné parmi les plusieurs appareils utilisateurs (7) de tenir compte de la plausibilité de l'au moins une valeur de correction (16) lors de la détermination de leur position propre respective.

6. Procédé selon l'une quelconque des revendications précédentes, **caractérisé en ce que**
- au moins un satellite sélectionné parmi les plusieurs satellites du système de navigation assisté par satellite (15) et/ou au moins une constellation sélectionnée parmi les plusieurs constellations de satellites du système de navigation assisté par satellite (15) sont déterminés, lesquels sont associés à l'au moins une valeur de correction (16),
- l'au moins un paquet d'informations (19) contenant une deuxième recommandation d'utilisation pour le groupe sélectionné parmi les plusieurs appareils utilisateurs (7), afin d'indiquer au groupe sélectionné parmi les plusieurs appareils utilisateurs (7) de tenir compte de la plausibilité des valeurs de correction associées à l'au moins un satellite sélectionné et/ou à l'au moins une constellation sélectionnée lors de la détermination de leur position propre respective.

7. Procédé selon l'une quelconque des revendications précédentes, **caractérisé en ce que** des perturbations atmosphériques, qui influencent l'émission des signaux satellite associés à l'au moins une valeur de correction (16), sont déterminées, les indications concernant les perturbations atmosphériques étant fournies au groupe sélectionné parmi les plusieurs appareils utilisateurs (7) par le biais de l'au moins un paquet d'informations (19).

8. Procédé selon l'une quelconque des revendications précédentes, **caractérisé en ce que** l'au moins une valeur de correction (16) est définie et fournie aux plusieurs appareils utilisateurs (7) du système de navigation assisté par satellite (15) en fonction de signaux satellite reçus par au moins plusieurs stations de référence sélectionnées (4') parmi les plusieurs stations de référence (4), en particulier par toutes les stations de référence (4), et des coordonnées connues des au moins plusieurs stations de référence sélectionnées (4'), en particulier de toutes les stations de référence (4).

9. Procédé selon l'une quelconque des revendications précédentes, **caractérisé en ce que** l'au moins un paquet d'informations (19) est fourni au groupe sélectionné parmi les plusieurs appareils utilisateurs (7) au moyen d'au moins un satellite de communication (2) et/ou d'un réseau de téléphonie mobile (13).

10. Procédé de fonctionnement d'un système de navigation assisté par satellite (15) comprenant plusieurs satellites, plusieurs appareils utilisateurs (7) et un système de service de correction (1), le système de service de correction (1) comprenant plusieurs stations de référence (4) présentant des coordonnées fixes et connues dans un système de coordonnées,
- les plusieurs stations de référence (4) étant exploitées pour recevoir des signaux satellite de plusieurs satellites du système de navigation assisté par satellite (15),
- au moins une valeur de correction (16) étant définie en fonction de signaux satellite reçus par au moins une station de référence (4') sélectionnée parmi les plusieurs stations de référence (4), et des coordonnées connues de l'au moins une station de référence sélectionnée (4'), et fournie à plusieurs appareils utilisateurs (7) du système de navigation assisté par satellite (15), et
- l'au moins une valeur de correction (16) étant vérifiée quant à sa plausibilité,
**caractérisé en ce que**
- le système de service de correction (1) est exploité au moyen d'un procédé selon l'une quelconque des revendications 1 à 9.

11. Système de service de correction (1), comprenant plusieurs stations de référence (4) présentant des coordonnées fixes et connues dans un système de coordonnées, **caractérisé en ce que** le système de service de correction (1) est conçu pour mettre en œuvre un procédé selon l'une quelconque des revendications 1 à 9.

12. Système de navigation assisté par satellite (15), comprenant
- plusieurs satellites,
- plusieurs appareils utilisateurs (7), et
- au moins un système de service de correction (1) selon la revendication 11.
